# EUROPÄISCHE PATENTSCHRIFT

(11) **EP 3 356 266 B1**
(45) Veröffentlichungstag und Bekanntmachung des Hinweises auf die Patenterteilung: **20.01.2021**
(21) Anmeldenummer: 16770734.8
(22) Anmeldetag: 19.09.2016
(51) Int. Cl.: B65G 61/00

(54) **PALETTIERVORRICHTUNG**
PALLETISING DEVICE
DISPOSITIF DE PALETTISATION

(30) Priorität: 30.09.2015 DE 102015116530
(43) Veröffentlichungstag der Anmeldung: 08.08.2018
(73) Patentinhaber: KHS GmbH, 44143 Dortmund (DE)
(72) Erfinder: METZLER, Horst, 67308 Einselthum (DE)
(86) Internationale Anmeldenummer: PCT/EP2016/072182
(87) Internationale Veröffentlichungsnummer: WO 2017/055127

(56) Entgegenhaltungen:
- DE-A1- 3 432 284
- DE-A1- 3 637 114
- DE-A1-102007 049 168
- FR-A1- 2 532 919
- FR-A1- 2 814 161
- JP-A- H07 157 078

## Beschreibung

Die vorliegende Erfindung betrifft eine Palettiervorrichtung für Stückgutträger, wie z.B. Flaschenkästen und andere Getränkebehälter.

Bekannt wurde eine Vorrichtung nach der DE 93011577U1. Diese Schrift beschreibt eine Palettiermaschine zum lagenweisen Aufsetzen oder Abnehmen von Gebinden, insbesondere von Flaschenkästen, auf bzw. von Paletten, mit einer senkrechten Drehsäule, an der ein Ausleger mit einem Greifkopf für eine Gebindelage höhenbeweglich gelagert ist, sowie mit einem Drehantrieb für die Drehsäule, durch welchen der Ausleger mit dem Greifkopf zwischen einer Palettenstation und einer Gebindestation verschwenkbar ist, Dabei ist weiterhin vorgesehen, dass an der Drehsäule gegenüber dem ersten Ausleger um 180 Grad versetzt ein zweiter Ausleger mit einem zweiten Greifkopf unabhängig höhenbeweglich gelagert ist, und dass die Palettenstation und die Gebindestation um 180 Grad versetzt am Umfang der Drehsäule angeordnet sind, und dass der Drehantrieb der Drehsäule am mindestens 180 Grad verschwenkt.

Ebenfalls bekannt wurde eine Vorrichtung nach der US 8,897,912 B2 Diese Schrift stellt eine Palettiervorrichtung für Stückgutträger umfassend einen ersten Ladetisch für Stückgutträger und eine zweite Förderstrecke für gestapelte Stückgutträger vor. Dabei umfasst diese Vorrichtung zwei Palettiermaschinen zum Aufnehmen und zum Absetzten von Stückgutträgern, wobei diese Palettiermaschinen sowohl Zugriff auf den Ladetisch als auch auf die zweite Förderstrecken haben, und wobei die Palettiermaschinen jeweils eine Traganordnung aufweisen, an welcher jeweils zumindest ein Greifkopf für den Stückgutträger angeordnet ist und wobei der Greifkopf sowohl in vertikaler als auch in horizontaler Richtung zwischen einer ersten Position über dem ersten Ladetisch und in einer zweiten Position über der zweiten Förderstrecke horizontal bewegbar ist, wobei die beiden Palettiermaschinen beidseitig und sich gegenüberliegend an dem Ladetisch angeordnet sind, wobei die Palettiervorrichtung eine Steuerung für beide Palettiermaschinen aufweist, die dazu konzipiert ist, die Greifköpfe der bei den Palettiermaschinen auf einer identischen Umlaufbahn zu bewegen, die um eine sich quer zur ersten Ladetisch erstreckenden horizontalen Achse verläuft.

Obwohl die Vorrichtungen nach den Schriften DE 9301 15 77 U1 und US 8,897,912 B2 einen breiten Funktionsumfang aufweisen, erfüllen diese doch nicht alle heutigen Anforderungen an die Leistung derartiger Anlagen.

DE3637114A1 offenbart eine Palettiervorrichtung und ein Verfahren nach dem Oberbegriff der Ansprüche 1 und 11.

Es ist daher Aufgabe der Erfindung, eine Palettiervorrichtung für Stückgutträger zu schaffen, die schnell arbeitet und die eine größere Freiheit im Anlagendesign erlaubt. Diese Aufgabe wird erfindungsgemäß durch eine Palettiervorrichtung mit den Merkmalen des Anspruches 1 gelöst, als auch durch ein Verfahren zum Betrieb einer Palettiervorrichtung gemäß Anspruch 11. Vorteilhafte Weiterbildung der Erfindung sind Gegenstand der zugeordneten abhängigen Ansprüche. Weitere bevorzugte Ausführungsformen der Erfindung sind in der Beschreibung und in der Zeichnung offenbart.

Erfindungsgemäß hat die Palettiervorrichtung eine erste Förderstrecke für Stückgutträger und eine zweite Förderstrecke für gestapelte Stückgutträger. Die zweite Förderstrecke kann auch ein Förderpunkt sein, von dem aus die gestapelte Palette mit Stückgutträgern dann z.B. mit einem Gabelstapler entnommen oder angeliefert wird. Weiterhin enthält die Palettiervorrichtung zwei Palettiermaschinen zum Aufnehmen und Absetzen von Stückgutträgern, welche beide Palettiermaschinen jeweils Zugriff auf beide Förderstrecken haben. Jede der beiden Palettiermaschinen hat jeweils eine Traganordnung, an der wenigstens einen Greifkopf für den Stückgutträger sowohl in vertikaler als auch in horizontaler Richtung zwischen einer ersten Position über der ersten Förderstrecke und einer zweiten Position über der zweiten Förderstrecke horizontal bewegbar ist. Gemäß der Erfindung sind die beiden Palettiermaschinen beidseitig und sich gegenüberliegend

an der ersten Förderstrecke angeordnet. Diese Anordnung der Palettiermaschinen relativ zueinander ermöglicht es, dass beide Palettiermaschinen auf die identische erste und zweite Position zugreifen und alternierend auf einem identischen Bewegungspfad bewegt werden. Die beiden Greifköpfe der beiden Palettiermaschinen können damit in der Art eines Karussells auf einer Umlaufbahn um eine horizontale Achse quer zur Förderrichtung umlaufend zwischen der ersten und zweiten Position bewegt werden, was einerseits einen hohen Durchsatz erlaubt und andererseits eine gegenseitige Beeinflussung der Greifkopfträger der beiden Palettiermaschinen ausschließt. Durch die nahezu beliebig wählbare Förderlänge in horizontaler Richtung können darüber hinaus festgelegt werden, wie weit die erste Position von der zweiten Position beabstandet ist, wodurch dem Design für die erste Förderstrecke und die zweite Förderstrecke wenig Grenzen gesetzt sind.

Vorzugsweise sind die Greifköpfe an den Palettiermaschinen sowohl in vertikaler Richtung als auch translatorisch in horizontaler Richtung bewegbar, was zum einen eine schnelle Arbeitsweise ermöglicht und zum anderen die Dimensionierung der Palettiervorrichtung in einer Richtung quer zur ersten Förderstrecke minimiert, da die Greifköpfe und deren Bewegungsbahn allein auf einer direkten Strecke zwischen der ersten Position und der zweiten Position angeordnet sind und somit keinen Raum außerhalb dieser direkten Linie einnehmen. Die translatorische Bewegbarkeit der Greifköpfe stellt somit eine äußert effektive und platzsparende Ausführungsform der Erfindung dar. Durch die Vermeidung von Drehbewegungen in der horizontalen Ebene während des Stückgutträgertransports entfallen entsprechende Beschleunigungen für die Rotation. Die maximal übertragbaren Beschleunigungskräfte können somit vollständig dazu verwendet werden, höhere translatorische Bewegungsgeschwindigkeiten für die Greifköpfe zu erzielen.

Die Palettiervorrichtung hat vorzugsweise eine Steuerung, die die beiden Palettiermaschinen in Abstimmung zueinander steuert, derart, dass die Greifköpfe sich auf einer Umlaufbahn U₁, U₂ um eine sich quer zur Förderstrecke erstreckenden horizontalen Achse C bewegen.

Die Steuerungseinheit ist dazu konzipiert, die Greifköpfe derart zu bewegen, dass sie auf der Umlaufbahn im Wesentlichen entgegengesetzte bzw. abgewandte Positionen einnehmen. Diese entgegengesetzten Positionen sind natürlich beim Abstellen und Aufstellen der Stückgutträger nicht haltbar. Es ist nur beabsichtigt, dass die Greifköpfe möglichst weit entfernt auf einem weitgehend identischen (bis auf die sich ändernde Stapelhöhe des Stückgutträgerstapels) oder zumindest ähnlichen Bewegungspfad bewegt werden, um eine Kollision oder gegenseitige Behinderung zu vermeiden. Auf diese Weise wird das Risiko minimiert, dass das Handling eines Greifkopfes das Handling des anderen Greifkopfes beeinflusst. Zum anderen kann durch die entgegengesetzte, d.h. antizyklische Bewegung der beiden Greifköpfe eine sehr einfache und schnelle Taktung der Patentiervorrichtung realisiert werden.

Beispielsweise ist die Steuerung mit Sensoren für die Erfassung und/oder Ermittlung der Positionen der Greifköpfe verbunden. Die Steuerung weist dann eine Positionserfassung der Greifköpfe auf und hat eine Sperrschaltung, die eine horizontal gegenläufige Bewegung der Greifköpfe sperrt, wenn ihr gegenseitiger vertikaler Abstand einen unteren Grenzwert unterschreitet. Auf diese Weise wird hardwaremäßig abgesichert, dass die beiden beladenen Greifköpfe bei ihrer gegenläufigen horizontalen Bewegung sich nicht gegenseitig oder den von ihnen gehaltenen Stückgutträger berühren. Auf diese Weise wird die Betriebssicherheit der Maschine wesentlich erhöht. Die Sensoren können beispielsweise als Berührungssensoren, Weg-Messsysteme, Messsysteme für den Ist-Drehwinkel (Absolut oder Inkremental) der Antriebsmotoren oder ähnliche Systeme ausgebildet sein, wie sie dem Fachmann allgemein bekannt sind.

In einer vorteilhaften Ausbildung der Erfindung sind die Greifköpfe an in Querrichtung der ersten Förderstrecke verlaufenden und einander zugewandten Auslegern gehalten. Auf diese Weise lässt sich die Position der Greifköpfe quer zur ersten Förderstrecke leicht justieren.

In einer vorteilhaften Weiterbildung der Erfindung ist die Bewegungsstrecke der beiden Greifköpfe in der horizontalen Ebene weitgehend identisch, natürlich bis auf die Tatsache, dass sich aufgrund der Stapelbildung/Stapelhöhenverminderung der Stückgutträger auf der zweiten Förderstrecke der Bewegungspfad jedes Greifkopfes mit jedem Absetzen/Aufnehmen eines Stückgutträgers auf den Stapel/vom Stapel ändert. Auf diese Weise wird der Platzbedarf der Vorrichtung quer zur Richtung der ersten Förderstrecke minimiert und die karussellartige Umlaufbewegung der beiden Greifköpfe um eine sich quer zur Förderstrecke zur ersten Förderstrecke erstreckende horizontale Achse erleichtert. Zudem wird eine direkte lineare Bewegung der Greifköpfe erzielt, die den minimalen Weg zwischen der ersten und zweiten Position erfordert. Die Vorrichtung kann daher äußerst schnell arbeiten.

In einer vorteilhaften Weiterbildung der Erfindung hat die Traganordnung eine sich vertikal erstreckende Tragsäule zum vertikal verstellbaren Halten der Greifköpfe. Eine derartige Konstruktion ist einfach zu realisieren und auch einfach zu positionieren.

Vorzugsweise ist der Greifkopf bzw. der Ausleger des Greifkopfes jeder der beiden Palettiermaschinen an einer in Richtung der ersten Förderstrecke erstreckenden horizontalen Führungsschiene zwischen der ersten Position und zweiten Position bewegbar gehalten, welche Führungsschiene an der Tragsäule höhenverstellbar gehalten ist. Auf diese Weise wird eine einfache vertikale Bewegung als auch translatorische Bewegung des Greifkopfes zwischen den ersten und zweiten Positionen mit geringem mechanischem Aufwand ermöglicht.

In einer vorteilhaften Weiterbildung der Erfindung ist die eine maximale vertikale Verfahrbarkeit der Greifköpfe begründende Höhe der Traganordnung bzw. Tragseile zumindest so groß wie die maximale Höhe eines Stückgutträgerstapels zzgl. der doppelten Höhe der mit Stückgutträgern bestückten Greifköpfe. Auf diese Weise wird sichergestellt, dass die beiden Greifköpfe der beiden Palettiermaschinen selbst bei maximaler Stapelhöhe der Stückgutträger noch in zwei vertikal versetzten horizontalen Ebenen aneinander vorbei bewegt werden können, ohne sich zu berühren. Eine derartige Ausführungsform der Erfindung ermöglicht es, dass die erste und zweite Position auf der ersten und zweiten Förderstrecke sehr eng beieinander liegen können, womit insgesamt eine sehr kompakte Anordnung der Palettiervorrichtung erzielt wird.

Falls die für diese Lösung erforderliche Höhe für die Traganordnung bzw. Tragsäule nicht zur Verfügung steht, kann in einer vorteilhaften Ausführungsform der Erfindung in dem horizontalen Bewegungspfad beider Greifköpfe zwischen der ersten und zweiten Position zumindest ein Zwischenabschnitt von wenigstens der Größe des Greifkopfes angeordnet sein. In diesem Zwischenabschnitt kann ein Greifkopf nach unten bewegt werden, so dass er vertikal unter dem anderen Greifkopf hindurch bewegt werden kann. Auf diese Weise können die Greifköpfe vertikal aneinander vorbeigeführt werden, wenn der Stückgutträgerstapel sehr hoch ist und die darüber zur Verfügung stehende Höhe der Traganordnung nicht ausreicht, um die beiden Greifköpfe mit Stückgutträgern vertikal versetzt aneinander vorbei zu bewegen. Die geringere Höhe der Palettiervorrichtung wird in dieser Ausführungsform durch eine etwas größere Länge kompensiert.

In einer vorteilhaften Weiterbildung der Erfindung verläuft die erste Förderstrecke quer zur zweiten Förderstrecke, was einen schnellen Durchsatz und ein geringe Größe der Vorrichtung erlaubt.

In einer vorteilhaften Weiterbildung der Erfindung ist die zweite Position über der zweiten Förderstrecke relativ zur ersten Position über der ersten Förderstrecke nur in Richtung der ersten Förderstrecke versetzt. Der Bewegungsablauf zum Überführen eines Stückgutträgers von der ersten Förderstrecke auf einen Stückgutträgerstapel auf der zweiten Förderstrecke kann somit in einer horizontal translatorischen Bewegung erfolgen, was einfach und schnell zu realisieren ist.

Die Erfindung betrifft ebenfalls ein Verfahren zum Betrieb einer Palettiervorrichtung für Stückgutträger, wie sie oben beschrieben wurde. Gemäß dem Verfahren werden die Greifköpfe der beiden Palettiermaschinen zwischen der ersten Position und der zweiten Position auf einer Umlaufbahn um eine quer zur Richtung der ersten Förderstrecke verlaufende horizontale Achse umlaufend bewegt. Auf diese Weise werden die beiden Greifköpfe der beiden Palettiermaschinen erfindungsgemäß auf dem identischen Bewegungspfad in Art eines Karussells bewegt, was einen sehr hohen Umsatz, d.h. eine hohe Stapelleistung der Palettiervorrichtung ermöglicht. Zudem werden durch die vergleichsweise glatte Umlaufbewegung geringe Beschleunigungswerte trotz hoher Bewegungsgeschwindigkeiten erzielt. In der horizontalen Ebene ist der Bewegungspfad der beiden Greifköpfe zwischen der ersten und zweiten Position linear.

Vorzugsweise werden die Greifköpfe derart bewegt, dass sie auf der Umlaufbahn entgegengesetzte Positionen einnehmen. Dies bedeutet, dass wenn der eine Greifkopf der ersten Palettiermaschinen einen Stückgutträger aufnimmt, der andere Greifkopf der zweiten Palettiermaschine gerade einen Stückgutträger auf dem Stückgutträgerstapel absetzt und vice versa. Auf diese Weise kann eine sehr hohe Taktung beim Aufnehmen und Absetzen der Stückgutträger und damit ein hoher Durchsatz erzielt werden.

Die Greifköpfe können auf der Umlaufbahn in kompletten Rundläufen bzw. Zyklen bewegt werden, d.h. in nur einer Richtung oder sie können in Halbzyklen in entgegengesetzter Richtung bewegt werden, d.h. in der Art eines Bogens. Durch beide Verfahrensweisen können hohe Bewegungsgeschwindigkeiten erzielt werden und durch die Tatsache, dass immer zwei Stückgutträger gleichzeitig auf dem Bewegungspfad zum Be- und Abladen der Stückgutträger zwischen der ersten und zweiten Position agieren, wird der Durchsatz durch die Palettiervorrichtung wesentlich erhöht.

Es ist prinzipiell möglich, den Durchsatz weiter zu vergrößern, indem noch mehr als zwei Greifköpfe auf der Umlaufbahn um die horizontale Achse senkrecht zur ersten Förderstrecke bewegt werden, in welchem Fall jedoch die zusätzlichen Greifköpfe an horizontal erstreckenden Führungsschienen unabhängig von den Traganordnungen der beiden Palettiermaschinen geführt werden müssen, z.B. an einer Führungsschiene, die von unten und/oder oben in den Bewegungspfad hineinragt. So können auch drei oder vier Greifköpfe in der Umlaufbahn geführt werden, was den Stückgutträgerdurchsatz der Vorrichtung entsprechend erhöht.

Das erfindungsgemäße Verfahren bzw. die erfindungsgemäße Palettiervorrichtung ermöglicht es bei geringer Kapazitätsauslastung oder im Falle einer Störung eine der beiden Palettiermaschinen abzuschalten und nur mit der anderen Palettiermaschine weiter zu arbeiten. Hierbei wird zwar im Wesentlichen der Durchsatz durch die Palettiervorrichtung halbiert, andererseits können jedoch komplette Stillstandzeiten der Palettiermaschine vermieden werden. So kann z.B. die Wartung einer Palettiermaschine durchgeführt werden, während die andere Palette der Maschine läuft. Im Gegensatz zur DE 93 01 577 U1, wo die beiden Ausleger miteinander gekoppelt sind, ist hier bei der vorliegenden Erfindung ein autarker Betrieb jeder der beiden Palettiermaschinen möglich.

In einer vorteilhaften Weiterbildung des Verfahrens wird einer der beiden Greifköpfe vertikal am anderen vorbeibewegt, wenn sich dieser in einen Zwischenabschnitt seines Bewegungspfades zwischen der ersten und zweiten Position befindet. Der Zwischenabschnitt ist in der horizontalen Ebene mindestens so groß wie der Greifkopf selbst. Auf diese Weise können die Greifköpfe vertikal aneinander vorbeibewegt werden, wenn die Traganordnung nicht so hoch gebaut werden kann, dass die beiden Greifköpfe oberhalb der maximalen Höhe eines Stückgutträgerstapels vertikal aneinander vorbeibewegt werden können. Diese Ausführungsform eignet sich somit für niedrigere Betriebshallen.

In einer vorteilhaften Weiterführung des Verfahrens werden die aktuellen Positionen der Greifköpfe erfasst und die Bewegung der Greifköpfe wird beim Erfassen einer Abweichung der aktuellen Greifkopfposition von ihren Sollwerten gestoppt. Auf diese Weise kann die Sicherheit der Anlage gewährleistet werden, selbst wenn einer der Greifköpfe aufgrund eines Defektes und aufgrund von Hindernissen auf seinem Bewegungspfad sich nicht entlang des vorgegebenen Bewegungspfades bewegt. Dies führt auch zu geringeren Maschinenausfallzeiten und zu geringerem Bruch bei den durchgesetzten Stückgutträgern.

Die oben beschriebenen Ausführungsformen der Erfindung können in beliebiger Weise miteinander kombiniert werden. Es ist für den Fachmann offensichtlich, dass Merkmale der unabhängigen Ansprüche einzeln oder mehrfach vorhanden sein können, so kann z.B. jede Palettiermaschine z.B. einen oder zwei Greifköpfe aufweisen. Wenn beispielsweise jede Palettiermaschine zwei Greifköpfe aufweist, die an einer horizontalen Führungsschiene zwischen der ersten und zweiten Position bewegbar gehalten sind, so können durch die Palettiervorrichtung gleichzeitig in einem Arbeitszyklus vier Stückgutträger auf ein oder zwei Stückgutträgerstapeln abgesetzt werden. Die Vorrichtung eignet sich natürlich auch dafür, die Stückgutträger von einem Stückgutträgerstapel abzunehmen, d.h. die erfindungsgemäße Palettiervorrichtung kann zum Stapeln oder zum Vereinzeln von Stückgutträgern verwendet werden.

Unter dem Begriff "zwei Palettiermaschinen" im Rahmen dieser Anmeldung werden zwei separate eigenständig betreibbare Vorrichtungen verstanden, die unabhängig voneinander in der Lage sind, wenigstens einen Stückgutträger mittels zumindest eines Greifkopfes zwischen einer ersten und einer zweiten Förderstrecke zu bewegen. Jede der beiden Palettiermaschinen hat die hierzu erforderlichen Bewegungsmechanismen, um einen Stückgutträger vertikal als auch horizontal zu bewegen.

Die zweite Förderstrecke kann auch ein Förderpunkt oder eine Förderposition sein.

Die Erfindung wird nachfolgend beispielsweise anhand der schematischen Zeichnung beschrieben. In dieser zeigen:
- Fig. 1: eine schematische Ansicht auf eine erste Ausführungsform einer Palettiermaschine,
- Fig. 2a und 2b: die Palettiervorrichtung gemäß Fig. 1 in Seitenansicht und Aufsicht von oben in zwei unterschiedlichen Phasen eines Beladevorgangs, und
- Fig. 3a und 3b: eine Seitenansicht und Aufsicht von oben auf eine Palettiervorrichtung ähnlich Fig. 1, die eine gegenüber Fig. 1 längere horizontale Führungsschiene aufweist und niedriger gebaut ist.

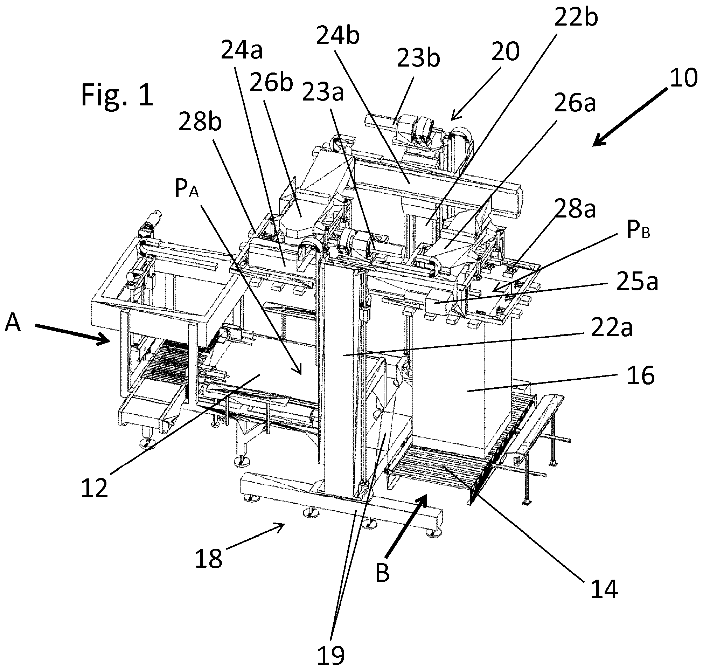

Fig. 1 zeigt eine Palettiervorrichtung 10 mit einer in Richtung A verlaufenden ersten Förderstrecke 12 und einer zweiten Förderstrecke 14, die sich in Richtung B quer zur Richtung A der ersten Förderstrecke 12 erstreckt. Die erste Förderstrecke 12 ist zum Zu- oder Abführen von Stückgutträgern, z.B. Getränkebehältern wie z.B. Flaschenkästen ausgebildet, während die zweite Förderstrecke 14 zum Zu- und/oder Abführen von Stückgutträgerstapeln 16 konzipiert ist. Beidseitig der ersten Förderstrecke 12 und sich gegenüberliegend sind erfindungsgemäß zwei Palettiermaschinen 18, 20 angeordnet, die jeweils über eine vertikale Tragsäule 22a, 22b verfügen, welche stabil mittels eines Standfußes 19 auf einem Hallenboden gehalten ist. An jeder Tragsäule 22a,b ist erfindungsgemäß jeweils eine horizontale Führungsschiene 24a, 24b vertikal bewegbar gehalten. An den horizontalen Führungsschienen 24a, 24b, die sich in Richtung A der ersten Förderstrecke 12 erstrecken, ist jeweils ein Ausleger 26a, 26b gehalten, der sich quer zur Richtung A der ersten Förderstrecke 12 erstreckt, wobei die beiden Ausleger 26a, 26b der beiden Palettiermaschinen 18, 20 einander zugewandt sind. An dem freien Ende jedes Auslegers 26a, 26b ist jeweils ein Greifkopf 28a, 28b gehalten, der zum Aufnehmen/Absetzen eines Stückgutträgers, z.B. eines Flaschenträgers ausgebildet ist. Am oberen Ende der vertikalen Tragsäule 22a,b ist ein erster Stellmotor 23a,b angeordnet, der zum vertikalen Verfahren der Führungsschiene 24a,b an der Tragsäule 22a,b ausgebildet ist. Am Ende jeder Führungsschiene 24a,b ist ein zweiter Stellmotor 25a,b angeordnet, welcher zum horizontalen Verfahren des Auslegers 26a,b an der Führungsschiene 24a,b konzipiert ist.

Vorzugsweise am Ende der ersten Förderstrecke 12 befindet sich eine erste Position P_{A}, von welcher mittels der Greifköpfe 28a, 28b Stückgutträger aufgenommen oder auf die Stückgutträger abgesetzt werden können. Dahingegen befindet sich auf der zweiten Förderstrecke 14 eine zweite Position P_{B}, an welcher die Greifköpfe 28a, 28b die aufgenommenen Stückgutträger auf einem Stückgutträgerstapel 16 absetzen bzw. von dem Stapel 16 entnehmen können. Die Palettiervorrichtung kann somit entweder zum Stapeln oder zum Vereinzeln von Stückgutträgern verwendet werden. Zwischen den beiden Positionen P_{A} und P_{B} liegt ein linearer Weg in Richtung Ader ersten Förderstrecke 12, so dass das Verfahren der Greifköpfe 28a, 28b zwischen der ersten Position P_{A} und der zweiten Position P_{B} in der horizontalen Ebene in einer translatorischen Bewegung erfolgen kann.

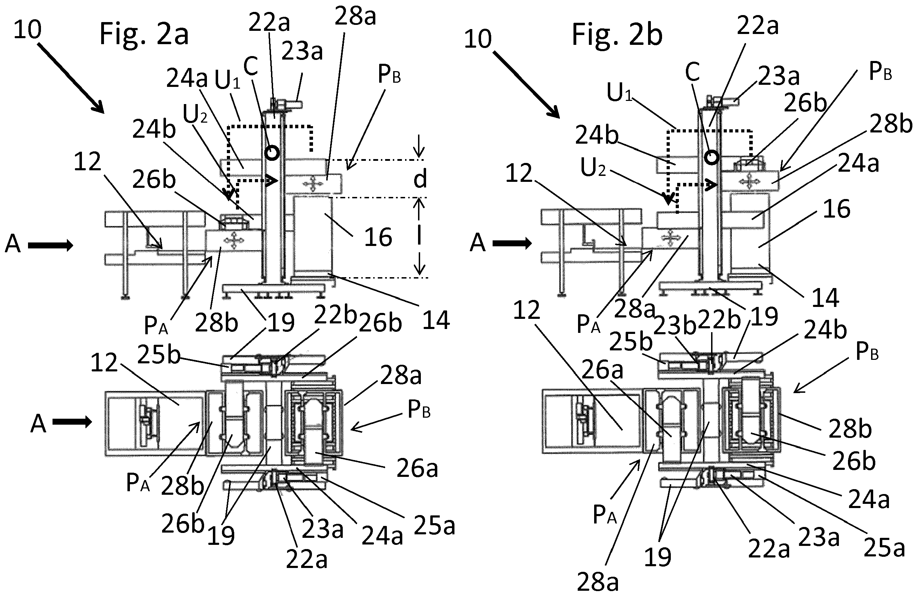

Die Tätigkeit der in Fig. 1 gezeigten Palettiervorrichtung wird nun in den Fig. 2a und 2b kurz erläutert.

Fig. 2a zeigt in Seitenansicht und Aufsicht eine erste Stellung der Palettiervorrichtung, bei welcher sich der zweite Stückgutträger 28b gerade in der ersten Position P_{A} befindet, während sich der zweite Stückgutträger 28a gerade in der zweiten Position P_{B} oberhalb des Stückgutträgerstapels 16 befindet. Die gestrichelten Pfeile geben den Umlaufweg U₁, U₂ an, den die beiden Stückgutträger 28a, 28b zum Aufnehmen/Absetzen der Stückgutträger zurücklegen. Während der erste Stückgutträger 28a nach dem Absetzen eines Stückgutträgers senkrecht nach oben und dann horizontal entgegen der Richtung A zur ersten Förderstrecke 12 und danach senkrecht nach unten auf die erste Position P_{A} fährt, fährt der zweite Stückgutträger 28b von der ersten Position P_{A} senkrecht nach oben und dann horizontal in Richtung A der ersten Förderstrecke 12 auf die zweite Förderstrecke 14 und dort auf die zweite Position P_{B}. Auf diese Weise wird eine karussellartige Umlaufbewegung der beiden Greifköpfe 28a, 28b um die horizontale Achse C senkrecht zur Richtung A der ersten Förderstrecke 12 realisiert.

Wie es in den Fig. 2a und 2b gut zu sehen ist, entspricht die Höhe h der Tragsäule 22a, 22b zumindest der Höhe l des Stückgutträgerstapels 16 zzgl. dem Zweifachen der Höhe d eines beladenen Stückgutträgers 28a, 28b. Auf diese Weise wird erreicht, dass die beiden Greifköpfe 28a, 28b auch dann noch vertikal übereinander wegfahren können, wenn der Stückgutträgerstapel 16 seine maximale Höhe l erreicht hat. Auf diese Weise können die beiden Positionen P_{A} und P_{B} für das Be- und Entladen der beiden Greifköpfe 28a, 28b direkt nebeneinander angeordnet werden, was den horizontalen Fahrweg und damit die Länge der horizontalen Führungsschienen 26a, 26b minimiert und somit einen höheren Durchsatz an Stückgutträgern erlaubt.

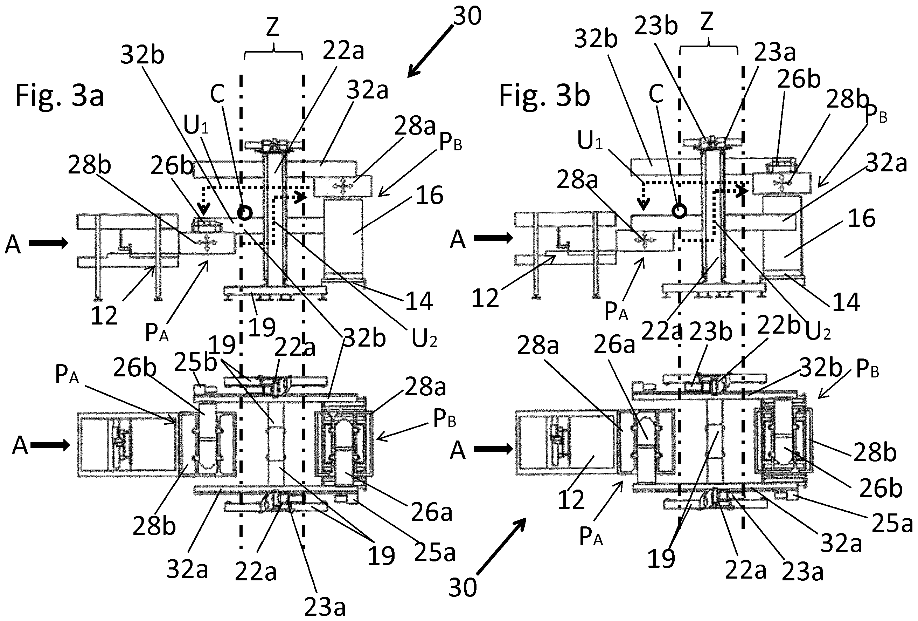

Fig. 3 zeigt eine zu den Fig. 1 und 2 weitgehend identische Ausführungsform einer Palettiervorrichtung. Im Gegensatz zu der Ausführungsform der Fig. 1 und 2 ist hier die Höhe der Tragsäulen 22a, 22b geringer als die maximale Höhe l des Stapels zzgl. der vertikalen Erstreckung zweier übereinander angeordneter beladener Greifköpfe 26a, 26b. Deshalb können hier die beiden Greifköpfe 26a, 26b nicht oberhalb des Stapels 16 übereinander bewegt werden. Deswegen sind in dieser Palettiervorrichtung 30 die horizontalen Führungsschienen 30a, 30b länger ausgebildet, so dass zwischen den beiden Positionen P_{A} und P_{B} ein Zwischenabschnitt Z angeordnet ist, in welchem jeweils ein Greifkopf 28a, 28b senkrecht verfahren werden kann, während der andere Greifkopf 28a horizontal an ihm vorbeibewegt wird. Die geringere Höhe der Palettiervorrichtung 30 wird hier durch eine etwas größere Längserstreckung der Palettiervorrichtung 30 in Richtung A der ersten Förderstrecke 12 erkauft, womit diese Anordnung insbesondere für niedrige Gebäude geeignet ist.

Die Erfindung ist nicht auf die dargestellten Ausführungsbeispiele beschränkt, sondern kann innerhalb des Schutzbereichs der nachfolgenden Ansprüche beliebig variiert werden.

### Bezugszeichenliste

- 10: Palettiervorrichtung (erste Ausführungsform)
- 12: erste Förderstrecke
- 14: zweite Förderstrecke
- 16: Stückgutträgerstapel
- 18: erste Palettiermaschine
- 19: Standfuß für Tragsäule
- 20: zweite Palettiermaschine
- 22a,b: vertikale Tragsäule
- 23a,b: erster Stellmotor für vertikale Führungsschienenposition
- 24a,b: horizontale Führungsschiene
- 25a,b: zweiter Stellmotor für Auslegerposition an der Führungsschiene
- 26a,b: Ausleger
- 28a,b: Greifkopf
- 30: Palettiervorrichtung (zweite Ausführungsform)
- 32a,b: lange horizontale Führungsschiene

## Patentansprüche

1. Palettiervorrichtung (10, 30) für Stückgutträger, umfassend eine erste Förderstrecke (12) für Stückgutträger, und eine zweite Förderstrecke (14) für gestapelte Stückgutträger, umfassend zwei Palettiermaschinen (18, 20) zum Aufnehmen und Absetzen von Stückgutträgern, welche Zugriff auf beide Förderstrecken (12, 14) haben, welche Palettiermaschinen (18, 20) jeweils eine Traganordnung (22a,b, 23a,b, 24a,b, 25a,b, 26a,b, 28a,b) aufweisen, an der wenigstens ein Greifkopf (28a,b) für den Stückgutträger sowohl in vertikaler als auch in horizontaler Richtung zwischen einer ersten Position (P_{A}) über der ersten Förderstrecke (12) und einer zweiten Position (P_{B}) über der zweiten Förderstrecke (14) horizontal bewegbar ist, wobei die beiden Palettiermaschinen (18, 20) beidseitig und sich gegenüberliegend an der ersten Förderstrecke (12) angeordnet sind, **dadurch gekennzeichnet, dass** die Palettiervorrichtung eine Steuerung für beide Palettiermaschinen (18, 20) aufweist, die dazu konzipiert ist, die Greifköpfe (28a,b) der beiden Palettiermaschinen auf einer identischen Umlaufbahn (U₁,U₂) zu bewegen, die um eine sich quer zur ersten Förderstrecke (12) erstreckende horizontale Achse verläuft, und dass die oeidseitig der ersten Förderstrecke (12) und sich gegenüberliegend angeordnete zwei Palettiermaschinen (18,20) ; jeweils über eine vertikale Tragsäule (22a, 22b) verfügen, welche stabil mittels eines Standfußes (19) auf einem Hallenboden gehalten ist, wobei an jeder Tragsäule (22a, 22b) jeweils eine horizontale Führungsschiene (24a, 24b) vertikal bewegbar gehalten ist.

2. Palettiervorrichtung (10, 30) nach Anspruch 1, **dadurch gekennzeichnet, dass** die Steuerung dazu konzipiert ist, die Greifköpfe (28a,b) derart zu bewegen, dass sie auf der Umlaufbahn (U₁,U₂) im Wesentlichen entgegengesetzte Positionen einnehmen.

3. Palettiervorrichtung (10, 30) nach Anspruch 1 oder 2, **dadurch gekennzeichnet, dass** die Steuerung eine Positionserfassung für die Positionen der Greifköpfe (28a,b) aufweist, und dass die Steuerung eine Sperrschaltung aufweist, die ein horizontal gegenläufige Bewegung der beiden Greifköpfe sperrt, wenn ihr vertikaler Abstand einen unteren Grenzwert unterschreitet, wobei die Steuerung zur Positionserfassung mit Positionssensoren verbunden ist.

4. Palettiervorrichtung (10, 30) nach einem der vorhergehenden Ansprüche, **dadurch gekennzeichnet, dass** die Greifköpfe (28a,b) an in Querrichtung der ersten Förderstrecke (12) verlaufenden Auslegern (26a,b) gehalten sind.

5. Palettiervorrichtung (10, 30) nach einem der vorhergehenden Ansprüche, **dadurch gekennzeichnet, dass** die Traganordnung (22a,b, 23a,b, 24a,b, 25a,b, 26a,b, 28a,b) eine sich vertikal erstreckende Tragsäule (22) zum vertikal verstellbaren Halten der Greifköpfe (28a,b) enthält.

6. Palettiervorrichtung (10, 30) nach Anspruch 4 und 5, **dadurch gekennzeichnet, dass** der Ausleger (26a,b) jeder der beiden Palettiermaschinen (18, 20) an einer in Richtung der ersten Förderstrecke (12) erstreckenden horizontalen Führungsschiene (24a,b) zwischen der ersten und der zweiten Position (P_{A}, P_{B}) bewegbar gehalten ist, welche Führungsschiene (24a,b) an der Tragsäule (22a,b) vertikal bewegbar gehalten ist.

7. Palettiervorrichtung (10, 30) nach einem der vorhergehenden Ansprüche, **dadurch gekennzeichnet, dass** die den maximalen vertikalen Verfahrweg der Greifköpfe (28a,b) begründende Höhe der Traganordnung (22a,b, 23a,b, 24a,b, 25a,b, 26a,b, 28a,b) zumindest der maximalen Höhe eines Stückgutträgerstapels (l) zuzüglich dem Doppelten der Höhe (d) des mit einem Stückgutträger bestückten Greifkopfs entspricht.

8. Palettiervorrichtung (10, 30) nach einem der vorhergehenden Ansprüche, **dadurch gekennzeichnet, dass** in dem horizontalen Bewegungspfad des Greifkopfes (28a,b)zwischen der ersten Position (P_{A}) und der zweiten Position (P_{B}) zumindest ein Zwischenabschnitt (Z) angeordnet ist, der wenigstens der Größe des Greifkopfes entspricht.

9. Palettiervorrichtung (10, 30) nach einem der vorhergehenden Ansprüche, **dadurch gekennzeichnet, dass** die erste Förderstrecke (12) quer zur zweiten Förderstrecke (14) verläuft.

10. Palettiervorrichtung (10, 30) nach einem der vorhergehenden Ansprüche, **dadurch gekennzeichnet, dass** die zweite Position (P_{B}) relativ zur ersten Position (P_{A}) nur in Richtung (A) der ersten Förderstrecke (12) versetzt ist.

11. Verfahren zum Betrieb einer Palettiervorrichtung (10, 30) für Stückgutträger, umfassend eine erste Förderstrecke (12) für Stückgutträger, und eine zweite Förderstrecke (14) für gestapelte Stückgutträger, umfassend zwei Palettiermaschinen (18, 20) zum Aufnehmen und Absetzen von Stückgutträgern, welche Zugriff auf beide Förderstrecken (12, 14) haben, welche Palettiermaschinen (18, 20) jeweils eine Traganordnung (22a,b, 23a,b, 24a,b, 25a,b, 26a,b, 28a,b) aufweisen, an der wenigstens ein Greifkopf (28a,b) für den Stückgutträger sowohl in vertikaler als auch in horizontaler Richtung zwischen einer ersten Position (P_{A}) über der ersten Förderstrecke (12) und einer zweiten Position (P_{B}) über der zweiten Förderstrecke (14) bewegbar ist, wobei die beiden Palettiermaschinen beidseitig und sich gegenüberliegend an der ersten Förderstrecke (12) angeordnet sind, in welcher Palettiervorrichtung (10, 30) die Greifköpfe der beiden Palettiermaschinen zwischen der ersten Position (P_{A}) und zweiten Position (P_{B}) auf einer Umlaufbahn (U₁,U₂) um eine quer zur Richtung der ersten Förderstrecke (12) verlaufende horizontale Achse (C) umlaufend bewegt werden, **dadurch gekennzeichnet, dass** die Greifköpfe (28a,b) der beiden Palettiermaschinen auf einer identischen Umlaufbahn (U₁,U₂) bewegt werden, die um eine sich quer zur ersten Förderstrecke (12) erstreckende horizontale Achse verläuft, und dass die beidseitig der ersten Förderstrecke (12) und sich gegenüberliegend angeordneten zwei Palettiermaschinen (18,20) über jeweils eine vertikale Tragsäule (22a, 22b) verfügen, welche stabil mittels eines Standfußes (19) auf einem Hallenboden gehalten ist, wobei an jeder Tragsäule (22a, 22b) jeweils eine horizontale Führungsschiene (24a, 24b) vertikal bewegbar gehalten ist.

12. Verfahren nach Anspruch 11, **dadurch gekennzeichnet, dass** die Greifköpfe (28 a,b) derart bewegt werden, dass sie auf der Umlaufbahn (U₁,U₂) entgegengesetzte Positionen einnehmen.

13. Verfahren nach einem der Ansprüche 11 bis 12, **dadurch gekennzeichnet, dass** die Greifköpfe (28 a,b) auf der Umlaufbahn (U₁,U₂) in kompletten Zyklen in nur einer Richtung oder in Halbzyklen in entgegengesetzter Richtung bewegt werden.

14. Verfahren nach einem der Ansprüche 11 bis 13, **dadurch gekennzeichnet, dass** bei geringer Kapazitätsauslastung der Palettiervorrichtung (10, 30) oder im Fall einer Störung einer der beiden Palettiermaschinen (18, 20) nur die andere Palettiermaschine betrieben wird.

15. Verfahren nach einem der Ansprüche 11 bis 14, **dadurch gekennzeichnet, dass** die aktuellen Positionen der Greifköpfe (28 a,b) erfasst werden, und dass die die Bewegung der Greifköpfe beim Erfassen einer Abweichung der aktuellen Greifkopfpositionen von ihren Sollwerten gestoppt wird.

## Claims

1. Palletising device (10, 30) for piece-goods carriers, comprising a first conveyor path (12) for piece-goods carriers, and a second conveyor path (14) for stacked piece-goods carriers, comprising two palletising machines (18, 20) for picking up and placing down piece-goods carriers, which have access to both conveyor paths (12, 14), which palletising machines (18, 20) each have a carrier arrangement (22a,b, 23a,b, 24a,b, 25a,b, 26a,b, 28a,b), on which at least one gripping head (28a,b) for the piece-goods carriers can be moved both in the vertical and horizontal direction between a first position (P_{A}) via the first conveyor path (12) and a second position (P_{B}) is horizontally moveable over the second conveyor path (14), wherein the two palletising machines (18, 20) are arranged on both sides and opposite each other on the first conveyor path (12), **characterised in that** the palletising device comprises a control device for both palletising machines (18, 20), which is designed such as to move the gripping heads (28a,b) of both the palletising machines on an identical circulating path (U₁, U₂), which runs about a horizontal axis extending transversely to the first conveyor path (12), and that the two palletising machines (18, 20), arranged on both sides of the first conveyor path (12) and opposite one another, are each provided with a vertical carrier column (22a, 22b), which is held stable by means of a standing foot (19) on a hall floor, wherein at each carrier column (22a, 22b) a horizontal guide rail (24a, 24b) is held such as to be capable of moving vertically.

2. Palletising device (10, 30) according to claim 1, **characterised in that** the control device is designed such as to move the gripping heads (28a, b) in such a way that they adopt essentially opposed positions on the circulating path (U1, U2).

3. Palletising device (10, 30) according to claim 1 or 2, **characterised in that** the control device comprises a position detector for the positions of the gripping heads (28a, b), and that the control device comprises a blocking circuit which blocks a horizontally opposed movement of the two gripping heads if their vertical spacing interval falls below a lower limit value, wherein the control device is connected to the position detector by position sensors.

4. Palletising device (10,30) according to any one of the preceding claims, **characterised in that** the gripping heads (28a,b) are held at outriggers (26a,b) running in a transverse direction to the first conveyor path (12).

5. Palletising device (10, 30) according to any one of the preceding claims, **characterised in that** the carrier arrangement (22a,b, 23a,b, 24a,b, 25a,b, 26a,b, 28a,b) contains a carrier column (22) extending vertically for holding the gripping heads (28a, b) such as to be adjustable vertically.

6. Palletising device (10, 30) according to claims 4 and 5, **characterised in that** the outrigger (26a, b) of each of the two palletising machines (18, 20) is held on a horizontal guide rail (24a, b), extending in the direction of the first conveyor path (12), such as to be movable between the first and second positions (P_{A}, P_{B}), which guide rail (24a, b) is held such as to be vertically movable at the carrier column (22a,b).

7. Palletising device (10, 30) according to any one of the preceding claims, **characterised in that** the height of the carrier arrangement (22a,b, 23a,b, 24a,b, 25a,b, 26a,b, 28a,b) which establishes the maximum vertical travel path of the gripping heads (28a, b) corresponds at least to the maximum height of a piece-goods stack (I) plus double the height (d) of the gripping head carrying a piece-goods carrier.

8. Palletising device (10, 30) according to any one of the preceding claims, **characterised in that** at least one intermediate section (Z) is arranged in the horizontal movement path of the gripping head (28a, b) between the first position (P_{A}) and the second position (P_{B}), which corresponds at least to the size of the gripping head.

9. Palletising device (10, 30) according to any one of the preceding claims, **characterised in that** the first conveyor path (12) runs transversely to the second conveyor path (14).

10. Palletising device (10, 30) according to any one of the preceding claims, **characterised in that** the second position (P_{B}) is offset relative to the first position (P_{A}) only in the direction (A) of the first conveyor path (12).

11. Method for operating a palletising device (10, 30) for piece-goods carriers, comprising a first conveyor path (12) for piece-goods carriers, and a second conveyor path (14) for stacked piece-goods carriers, comprising two palletising machines (18, 20) for picking up and placing down piece-goods carriers, which have access to both conveyor paths (12, 14), which palletising machines (18, 20) each have a carrier arrangement (22a,b, 23a,b, 24a,b, 25a,b, 26a,b, 28a,b), on which at least one gripping head (28a,b) for the piece-goods carriers can be moved both in the vertical and horizontal direction between a first position (P_{A}) via the first conveyor path (12) and a second position (P_{B}) via the second conveyor path (14), wherein the two palletising machines are arranged on both sides and opposite each other on the first conveyor path (12), in which palletising device (10, 30) the gripping heads of the two palletising machines are moved between the first position (P_{A}) and second position (P_{B}) on a circulating path (U₁, U₂) circulating about a horizontal axis (C) running transversely to the direction of the first conveyor path (12), **characterised in that** the gripping heads (28a, b) of the two palletising machines are moved on an identical circulating path (U₁,U₂) which runs about a horizontal axis extending transversely to the first conveyor path (12), and that the two palletising machines (18, 20) arranged on both sides of the first conveyor path (12) and opposite one another are each provided with a vertical carrier column (22a, 22b), which is held stable by a standing foot (19) on a hall floor, wherein at each carrier column (22a, 22b) in each case a horizontal guide rail (24a, 24b) is held, which can be moved vertically.

12. Method according to claim 11, **characterised in that** the gripping heads (28a, b) are moved in such a way that they adopt opposed positions on the circulating path (U₁,U₂).

13. Method according to any one of claims 11 to 12, **characterised in that** the gripping heads (28a,b) are moved on the circulating path (U₁,U₂) in complete cycles in only one direction, or in half cycles in opposing directions.

14. Method according to any one of claims 11 to 13, **characterised in that**, with a low capacity loading of the palletising device (10, 30) or in the event of a fault in one of the two palletising machines (18, 20) only the other palletising machines is operated.

15. Method according to any one of claims 11 to 14, **characterised in that** the present positions of the gripping heads (28a,b) are detected, and that the movement of the gripping heads is stopped in the event of the detection of a deviation in the present gripping head positions from their reference values.

## Revendications

1. Dispositif de palettisation (10, 30) pour un support de marchandises de détail, comprenant une première voie de transport (12) pour un support de marchandises de détail, et une seconde voie de transport (14) pour des supports de marchandises de détail empilés, comprenant deux machines de palettisation (18, 20) pour la réception et le dépôt de supports de marchandises de détail, qui ont accès aux deux voies de transport (12, 14), lesquelles machines de palettisation (18, 20) présentent respectivement un agencement porteur (22a,b, 23a,b, 24a,b, 25a,b, 26a,b, 28a,b), au niveau duquel l'au moins une tête de préhension (28a,b) pour le support de marchandises de détail est mobile non seulement dans le sens vertical mais aussi dans le sens horizontal entre une première position (P_{A}) sur la première voie de transport (12) et une seconde position (P_{B}) sur la seconde voie de transport (14) horizontalement, dans lequel les deux machines de palettisation (18, 20) sont agencées des deux côtés et à l'opposé l'une de l'autre au niveau de la première voie de transport (12), **caractérisé en ce que** le dispositif de palettisation présente une commande pour les deux machines de palettisation (18, 20) qui est conçue afin de déplacer les têtes de préhension (28a,b) des deux machines de palettisation sur une trajectoire circulaire (U₁, U₂) identique qui s'étend autour d'un axe horizontal s'étendant transversalement à la première voie de transport (12),
et que les deux machines de palettisation (18, 20) agencées des deux côtés de la première voie de transport (12) et à l'opposé l'une de l'autre disposent respectivement d'une colonne porteuse verticale (22a, 22b) qui est maintenue de manière stable au moyen d'un pied (19) sur un sol de hangar, dans lequel respectivement un rail de guidage (24a, 24b) horizontal est maintenu de manière mobile verticalement au niveau de chaque colonne porteuse (22a, 22b).

2. Dispositif de palettisation (10, 30) selon la revendication 1, **caractérisé en ce que** la commande est conçue afin de déplacer les têtes de préhension (28a,b) de telle manière qu'elles occupent sur la trajectoire circulaire (U₁, U₂) des positions sensiblement opposées.

3. Dispositif de palettisation (10, 30) selon la revendication 1 ou 2, **caractérisé en ce que** la commande présente une détection de position pour les positions des têtes de préhension (28a,b), et que la commande présente un circuit de verrouillage qui bloque un mouvement inverse horizontalement des deux têtes de préhension lorsque sa distance verticale n'atteint pas une valeur limite inférieure, dans lequel la commande pour la détection de position est reliée aux capteurs de position.

4. Dispositif de palettisation (10, 30) selon l'une des revendications précédentes, **caractérisé en ce que** les têtes de préhension (28a,b) sont maintenues au niveau de flèches (26a,b) s'étendant dans le sens transversal de la première voie de transport (12).

5. Dispositif de palettisation (10, 30) selon l'une des revendications précédentes, **caractérisé en ce que** l'agencement porteur (22a,b, 23a,b, 24a,b, 25a,b, 26a,b, 28a,b) contient une colonne porteuse (22) s'étendant verticalement pour le maintien réglable verticalement des têtes de préhension (28a,b).

6. Dispositif de palettisation (10, 30) selon les revendications 4 et 5, **caractérisé en ce que** la flèche (26a,b) de chacune des deux machines de palettisation (18, 20) est maintenue de manière mobile au niveau d'un rail de guidage (24a,b) horizontal s'étendant en direction de la première voie de transport (12) entre la première et la seconde position (P_{A}, P_{B}), lequel rail de guidage (24a,b) est maintenu de manière mobile verticalement au niveau de la colonne porteuse (22a,b).

7. Dispositif de palettisation (10, 30) selon l'une des revendications précédentes, **caractérisé en ce que** la hauteur fondant la course de déplacement verticale maximale des têtes de préhension (28a,b) de l'agencement porteur (22a,b, 23a,b, 24a,b, 25a,b, 26a,b, 28a,b) correspond au moins à la hauteur maximale d'une pile de supports de marchandises de détail (l) plus le double de la hauteur (d) de la tête de préhension équipée d'un support de marchandises de détail.

8. Dispositif de palettisation (10, 30) selon l'une des revendications précédentes, **caractérisé en ce que** dans la trajectoire de déplacement horizontale de la tête de préhension (28a,b) entre la première position (P_{A}) et la seconde position (P_{B}) au moins une section intermédiaire (Z) est agencée, laquelle correspond au moins à la grandeur de la tête de préhension.

9. Dispositif de palettisation (10, 30) selon l'une des revendications précédentes, **caractérisé en ce que** la première voie de transport (12) s'étend transversalement à la seconde voie de transport (14).

10. Dispositif de palettisation (10, 30) selon l'une des revendications précédentes, **caractérisé en ce que** la seconde position (P_{B}) est décalée par rapport à la première position (P_{A}) seulement en direction (A) de la première voie de transport (12).

11. Procédé de fonctionnement d'un dispositif de palettisation (10, 30) pour un support de marchandises de détail, comprenant une première voie de transport (12) pour un support de marchandises de détail, et une seconde voie de transport (14) pour des supports de marchandises de détail empilés, comprenant deux machines de palettisation (18, 20) pour la réception et le dépôt de supports de marchandises de détail qui ont accès aux deux voies de transport (12, 14), lesquelles machines de palettisation (18, 20) présentent respectivement un agencement porteur (22a,b, 23a,b, 24a,b, 25a,b, 26a,b, 28a,b), au niveau duquel au moins une tête de préhension (28a,b) pour le support de marchandises de détail est mobile non seulement dans le sens vertical mais aussi dans le sens horizontal entre une première position (P_{A}) sur la première voie de transport (12) et une seconde positon (P_{B}) sur la seconde voie de transport (14), dans lequel les deux machines de palettisation sont agencées des deux côtés et à l'opposé l'une de l'autre au niveau de la première voie de transport (12), dans lequel dispositif de palettisation (10, 30) les têtes de préhension des deux machines de palettisation sont déplacées en rotation entre la première position (P_{A}) et seconde position (P_{B}) sur une trajectoire circulaire (U₁, U₂) autour d'un axe (C) horizontal s'étendant transversalement au sens de la première voie de transport (12), **caractérisé en ce que**
les têtes de préhension (28a,b) des deux machines de palettisation sont déplacées sur une trajectoire circulaire (U₁, U₂) identique qui s'étend autour d'un axe horizontal s'étendant transversalement à la première voie de transport (12),
et que les deux machines de palettisation (18, 20) agencées des deux côtés de la première voie de transport (12) et à l'opposé l'une de l'autre disposent respectivement d'une colonne porteuse verticale (22a, 22b) qui est maintenue de manière stable au moyen d'un pied (19) sur un sol de hangar, dans lequel respectivement un rail de guidage (24a, 24b) horizontal est maintenu de manière mobile verticalement au niveau de chaque colonne porteuse (22a, 22b).

12. Procédé selon la revendication 11, **caractérisé en ce que** les têtes de préhension (28a,b) sont déplacées de telle manière qu'elles occupent sur la trajectoire circulaire (U₁, U₂) des positions opposées.

13. Procédé selon l'une des revendications 11 à 12, **caractérisé en ce que** les têtes de préhension (28a,b) sont déplacées sur la trajectoire circulaire (U₁, U₂) dans des cycles complets dans un seul sens ou dans des demi-cycles dans le sens opposé.

14. Procédé selon l'une des revendications 11 à 13, **caractérisé en ce qu'**en cas d'utilisation faible des capacités du dispositif de palettisation (10, 30) ou dans le cas d'une panne d'une des deux machines de palettisation (18, 20) seule l'autre machine de palettisation est en fonctionnement.

15. Procédé selon l'une des revendications 11 à 14, **caractérisé en ce que** les positions actuelles des têtes de préhension (28a,b) sont détectées, et que le déplacement des têtes de préhension est arrêté lors de la détection d'un écart des positions de tête de préhension actuelles de leurs valeurs de consigne.
